# EUROPÄISCHE PATENTSCHRIFT

(11) **EP 1 386 098 B1**
(45) Veröffentlichungstag und Bekanntmachung des Hinweises auf die Patenterteilung: **02.06.2010**
(21) Anmeldenummer: 02732359.1
(22) Anmeldetag: 25.03.2002
(51) Int. Cl.: F16J 15/02

(54) **RINGDICHTUNG, INSBESONDERE FÜR STECKANSCHLÜSSE**
ANNULAR SEAL, IN PARTICULAR FOR PLUG-IN CONNECTORS
JOINT ANNULAIRE, NOTAMMENT POUR DES RACCORDS ENFICHABLES

(30) Priorität: 11.05.2001 DE 10123931; 27.11.2001 DE 10159220
(43) Veröffentlichungstag der Anmeldung: 04.02.2004
(73) Patentinhaber: MSA Auer GmbH, 12059 Berlin (DE)
(72) Erfinder: LEUSCHNER, Carsten, 15831 Grossziethen (DE); KLING, Peter, 12101 Berlin (DE); KADOW, Peter, 12099 Berlin (DE)
(74) Vertreter: Wablat, Wolfgang
(86) Internationale Anmeldenummer: PCT/DE2002/001159
(87) Internationale Veröffentlichungsnummer: WO 2002/093045

(56) Entgegenhaltungen:
- US-A- 4 304 415
- US-A- 5 261 677

## Beschreibung

Die Erfindung bezieht sich auf eine Ringdichtungsvorrichtung für zwei ineinandersteckbare Bauteile, insbesondere für Steckanschlüsse von Atemschutzgeräten, gemäß den Merkmalen des Oberbegriffs des Patentanspruches 1. Dabei ist ein elastischer Dichtring in einer Ringnut des ersten Bauteils aufgenommen und weist an der zu dem zweiten Bauteil weisenden Seite eine mittig umlaufende Dichtwulst sowie an der zum Boden der Ringnut weisenden gegenüberliegenden Seite von einer konkav gewölbten Vertiefung ausgehende elastische Lippen auf.

Ringdichtungsvorrichtungen für Steckanschlüsse dieser Art sollen eine sichere Abdichtung und einen festen Sitz der beiden ineinandergesteckten Teile in Längsrichtung und dennoch eine Drehbeweglichkeit dieser Teile gegeneinander gewährleisten. Die Herstellung einer dichten und drehbeweglichen Steckverbindung bereitet, insbesondere bei Steckanschlüssen von Atemschutzgeräten, jedoch insofern Schwierigkeiten, als es gerade in diesem Anwendungsbereich erforderlich ist, dass die beiden Bauteile auch bei größeren Durchmessertoleranzen leicht und schnell, und zwar ohne Rollen oder Kippen des Dichtungsringes und ohne Austreten oder Verschmutzung des Schmiermittels ineinandergeschoben und die beiden Bauteile leicht zueinander verdreht werden können sowie ein hohes Maß an Sicherheit für den Benutzer bieten.

Aus der US-A-5 261 677 ist eine Ringdichtungsvorrichtung dieser Art vorbekannt, die in einer Ringnut angeordnet ist und eine mittig ausgebildete V-förmige Erhöhung als Dichtwulst sowie zum Boden der Ringnut weisende Dichtlippen umfasst.

Nachteilig bei den bekannten Ringdichtungsvorrichtungen ist, dass diese unter rauhen Einsatzbedingungen und bei robuster Handhabung keine sichere Funktion und keine lange Lebensdauer gewährleisten.

Der Erfindung liegt die Aufgabe zugrunde, die Ringdichtungsvorrichtung der eingangs erwähnten Art so auszubilden, dass auch unter rauhen Einsatzbedingungen und bei robuster Handhabung eine sichere Funktion und eine lange Lebensdauer gewährleistet ist.

Erfindungsgemäß wird diese Aufgabe bei einer gattungsgemäßen Ringdichtungsvorrichtung für Steckanschlüsse von Atemschutzgeräten mit einem gemäß den Merkmalen des Kennzeichens des Patentanspruches 1 ausgebildeten Ringdichtungsvorrichtung gelöst.

Ausgehend von einem in der Ringnut eines stillstehenden Bauteils mit Hilfe eines Schmiermittels gleitfähig angeordneten Dichtringes, der an seiner Dichtfläche mit einem eingesteckten drehbeweglichen Bauteil reibschlüssig verbunden ist, besteht der Grundgedanke der Erfindung darin, dass auf der Dichtfläche des Dichtringes eine mittig umlaufende Dichtwulst zur Erzeugung des Reibungsschlusses und in der gegenüberliegenden Gleitfläche eine konkav gewölbte Gleitflächenvertiefung, die in seitlichen Gleitflächen-Dichtlippen endet, vorgesehen ist.

Der so ausgebildete Dichtring weist über die Höhe seines Querschnitts eine hohe Elastizität und über seine Breite eine ausreichende Steifigkeit auf, so dass Durchmessertoleranzen der ineinander gesteckten Bauteile ausgeglichen werden und eine hohe Abdichtwirkung und beim Zusammenstecken geringe Reibungskräfte zu verzeichnen sind. Die beiden Bauteile lassen sich zudem mühelos ineinander schieben, ohne dass es zu einem Rollen, Umklappen oder Verkanten des Dichtringes kommt. Die Gleitflächenvertiefung bildet mit dem Boden der Ringnut eine Schmiermittelkammer, so dass das in der Ringnut befindliche Schmiermittel nicht verloren geht, sondern immer in ausreichender Schichtdicke an der Gleitfläche vorhanden ist. Seine Schmierwirkung wird auch nicht durch in die Ringnut eindringende Schmutzpartikel beeinträchtigt. Durch das Einkammern des Schmiermittelreservoirs wird der Dichtring auch nicht durch an ausgetretenem Schmiermittel haftende Schmutzteilchen verschmutzen. Somit ist eine sichere Funktion der Ringdichtung und eine bequeme Handhabung des Steckanschlusses über einen langen Zeitraum gewährleistet. Der Dichtring erreicht eine hohe Lebensdauer. Im Niederdruckbereich ist eine optimale Abdichtung zwischen den beiden ineinander gesteckten Bauteilen gewährleistet.

In vorteilhafter Weiterbildung der Erfindung sind in die Dichtfläche zur Erhöhung der Dichtwirkung zwei weitere, jeweils am Rand ausgeformte Randdichtlippen integriert, deren Dichtlinie geringfügig unter der der mittleren Dichtwulst liegt, sich aber bei einer Kraftwirkung auf die mittig verlaufende Dichtwulst an das eingeschobene Bauteil dichtend anlegt. Damit wird ein dreifach wirkendes Dichtelement zur Verfügung gestellt.

In weiterer Ausgestaltung der Erfindung hat der Dichtring ebene Flanken und seine Querschnittsfläche ist zur Gleitfläche hin verjüngt ausgebildet. Der Dichtring ist mit seitlichem Spiel in der Ringnut angeordnet.

Aus der nachfolgenden Beschreibung einer bevorzugten Ausführungsform einer Ringdichtungsvorrichtung für Steckanschlüsse von Atemschutzgeräten und aus den weiteren Patentansprüchen ergeben sich weitere vorteilhafte Ausgestaltungen der Erfindung.

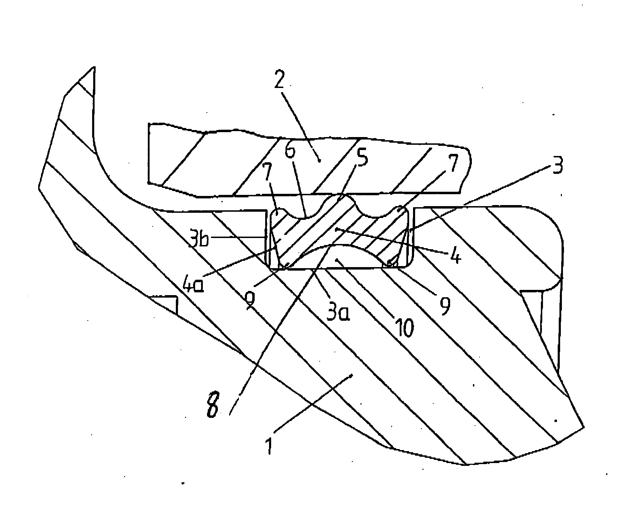

Ein Ausführungsbeispiel der erfindungsgemäßen Ringdichtungsvorrichtung wird anhand der einzigen Zeichnung näher erläutert. Diese zeigt eine Schnittansicht der Ringdichtungsvorrichtung für eine Steckverbindung zwischen einem feststehenden Bauteil und einem in diesem drehbaren Bauteil für eine Steckverbindung von Atemschutzgeräten, wobei ein Dichtring mit seitlichem Spiel in der Ringnut des feststehenden Bauteils angeordnet ist.

In der einzigen Figur sind zwei über eine Ringdichtungsvorrichtung für einen Steckanschluß verbundene Bauteile 1, 2 eines Atemschutzgerätes dargestellt. In der Innenwand einer Öffnung des feststehenden Bauteils 1 befindet sich eine Ringnut 3, in der ein Dichtring 4 auf einem Schmierfilm gleitfähig angeordnet ist. Dadurch ist das zweite Bauteil 2, das in axialer Richtung durch Reibungskräfte an dem Dichtring 4 gehalten ist, gleichzeitig drehbeweglich in der Ringnut 3 gelagert und geführt.

Der Dichtring 4 hat im Querschnitt eine einem Trapez ähnliche Grundform, wobei das Verhältnis seiner Höhe zu seiner Breite etwa bei 1 zu 2 liegt und die untere Seite (Gleitfläche) kürzer als die obere Seite (Dicht-/Reibfläche) ist. Der Dichtring 4 weist an der dem eingesteckten, drehbaren Bauteil 2 zugewandten, hier als Dichtfläche bezeichneten Seite eine mittig verlaufende gewölbte Dichtwulst 5 und zwei an diese über eine gewölbte (konkave) Dichtflächenvertiefung 6 anschließende, am Rand des Dichtringes 4 umlaufende Randdichtlippen 7 auf. Die zum Nutboden 3a der Ringnut 3 weisende Gleitfläche des Dichtringes 4 ist als umlaufende, konkav gewölbte Gleitflächenvertiefung 8 ausgebildet, die am Rand in umlaufende Gleitflächen-Dichtlippen 9 übergeht. Die Gleitflächen-Dichtlippen 9 sind schmaler als die diesen an der Dichtfläche gegenüberstehenden Randdichtlippen 7 ausgebildet.

Durch die konkaven Dichtflächenvertiefungen 6 und die konkave Gleitflächenvertiefung 8 (letztere umfasst etwa 25% - 30 % der Gesamthöhe des Dichtringquerschnittes) ist der Dichtring 4 einerseits besonders biegeelastisch und ermöglicht daher ein bequemes Zusammenstecken und eine sichere Abdichtung, behält aber dennoch seine Stabilität beim Zusammenstecken der beiden Bauteile 1 und 2 bei, so dass sich der Dichtring 4 bei der Herstellung der Steckverbindung weder rollen noch verkanten oder kippen kann

Aufgrund der konkaveren Gleitflächenvertiefung 8 wird mit dem Nutboden 3a der Ringnut 3 eine durch die Gleitflächen-Dichtlippen 9 seitlich begrenzte Schmiermittelkammer 10 gebildet. Das in der Schmiermittelkammer 10 eingeschlossene Schmiermittel kann somit nicht aus der Ringnut 3 entweichen oder durch von außen in die Ringnut 3 eindringende Fremdstoffe verunreinigt werden. Dadurch ist eine gleichbleibend gute Gleitfähigkeit des Dichtringes 4 in der Ringnut 3 und eine lange Lebensdauer des Dichtringes 4 gewährleistet. Die Gleitflächen-Dichtlippen 9 sind im übrigen schmaler als die Randdichtlippen 7 ausgebildet, um bei radialer Belastung des Dichtringes 4 zu den Nutflanken 3b der Ringnut 3 hin elastisch ausweichen zu können und die Gleitfähigkeit des Dichtringes 4 in der Ringnut 3, aber auch die Dichtwirkung in der Ringnut 3 nicht zu beeinträchtigen.

Gemäß der dargestellten Ausführungsform ist der Dichtring 4 so ausgebildet, dass ein seitlicher Abstand zu den Nutflanken 3b der Ringnut 3 besteht und die Flanken 4a des Dichtringes 4 gerade sind und in der Ringnut 3 schräg nach innen verlaufen.

Die Dichtwirkung zwischen der Dichtfläche des Dichtrings 4 und dem eingeschobenen Bauteil 2 ist in erster Linie durch die mittlere Dichtwulst 5 bestimmt, die reibschlüssig an der Oberfläche des Bauteils 2 anliegt. Durchmessertoleranzen können durch die auf der Basis der geometrischen Ausbildung hohe Elastizität des Dichtringes 4 ausgeglichen werden. Durch eine auf die mittlere Dichtwulst 5 ausgeübte Druckkraft wird der Dichtring 4 jedoch derart elastisch verformt, dass die Randdichtlippen 7 eine erhöhte Position (nicht dargestellt) einnehmen und mit dem eingeschobenen Bauteil 2 in Kontakt kommen, so dass an der Dichtfläche des Bauteils 2 eine dreifache Dichtwirkung erzielt wird, gleichzeitig aber die Flächenpressung am Nutboden 3a der Ringnut 3 durch das seitliche Ausweichen der schmalen Gleitflächen-Dichtlippen nicht erhöht wird und eine hohe Gleitfähigkeit des Dichtringes in der Ringnut 3 und damit die Drehbeweglichkeit des Bauteils 2 an dem Bauteil 1 gewährleistet ist.

### Bezugszeichenliste

- 1: erstes Bauteil (feststehend)
- 2: zweites Bauteil (drehbeweglich)
- 3: Ringnut
- 3a: Nutboden
- 3b: Nutflanke
- 4: Dichtring
- 4a: Flanke
- 5: Dichtwulst
- 6: Dichtflächenvertiefung
- 7: Randdichtlippe
- 8: Gleitflächenvertiefung
- 9: Gleitflächen-Dichtlippe
- 10: Schmiermittelkammer

## Patentansprüche

1. Aingdichtungsvorrichtung für zwei ineinandersteckbare Bauteile (1, 2), insbesondere für Steckanschlüsse von Atemschutzgeräten, bei der ein elastischer Dichtring (4) in einer Ringnut (3) des ersten Bauteils (1) aufgenommen ist und an der zu dem zweiten Bauteil (2) weisenden Seite eine mittig umlaufende Dichtwulst (5) sowie an der zum Boden der Ringnut (3) weisenden gegenüberliegenden Seite von einer konkav gewölbten Vertiefung (8) ausgehende elastische Lippen (8) aufweist,
**dadurch gekennzeichnet,**
**dass** der Dichtring (4) mit seitlichem Spiel und über eine von der Vertiefung (8) gebildete und durch die seitlichen Lippen abgedichtete, mit einem Schmiermittel gefüllte Schmiermittelkammer (10) gleitend drehbar auf dem Nutboden (3a) der Ringnut (3) gelagert ist, während die Dichtwulst (5) reibschlüssig an das zweite, gemeinsam mit dem Dichtring (4) drehbare Bauteil (2) abschließt.

2. Ringdichtungsvorrichtung nach Anspruch 1, **dadurch gekennzeichnet, dass** der Dichtring (4) an der Dichtfläche eine von der Dichtwulst (5) beidseitig ausgehende, konkav gewölbte Dichtflächenvertiefung (6) mit elastizitätssteigernder Wirkung aufweist, die jeweils in einer umlaufenden Randdichtlippe (7) endet.

3. Ringdichtungsvorrichtung nach Anspruch 2, **dadurch gekennzeichnet, dass** die obere Kante der Randdichtlippen (7) unterhalb der Oberkante der Dichtwulst (5) liegt, wobei sich die Randdichtlippen (7) bei einer auf die mittlere Dichtwulst (5) wirkenden Kraft nach oben verschieben und als zusätzliches Dichtelement wirken.

4. Ringdichtungsvorrichtung nach einem der Ansprüche 1 bis 3, **dadurch gekennzeichnet, dass** die Dichtwulst (5), die Randdichtlippen (6) und die Gleitflächen-Dichtlippen (9) eine gerundete, nach außen gewölbte Querschnittsform aufweise.

5. Ringdichtungsvorrichtung nach einem der Ansprüche 1 bis 4, **dadurch gekennzeichnet, dass** die Flanken (4a) des Dichtringes (4) eben sind und schräg nach innen gerichtet verlaufen.

6. Ringdichtungsvorrichtung nach einem der Ansprüche 1 bis 4, **dadurch gekennzeichnet, dass** die Flanken (4a) des Dichtringes (4) konkav gewölbt ausgebildet sind.

7. Ringdichtungsvorrichtung nach einem der Ansprüche 1 bis 6, **dadurch gekennzeichnet, dass** das Verhältnis von Breite zu Höhe der Querschnittsfläche des Dichtringes (4) etwa bei 2 zu 1 liegt.

8. Ringdichtungsvorrichtung nach Anspruch 1, **dadurch gekennzeichnet, dass** die Höhe der konkaven Gleitflächenvertiefung (8) etwa 25 % bis 35 % der Gesamthöhe des Dichtringes beträgt.

9. Ringdichtungsvorrichtung nach einem der Ansprüche 1 bis 8, **dadurch gekennzeichnet, dass** die Gleitflächen-Dichtlippen (9) schmaler als die Randdichtlippen (7) sind.

## Claims

1. A ring seal device for two components (1, 2), which can be inserted into one another, in particular for plug-in connections for breathing apparatuses, in the case of which an elastic sealing ring (4) is accommodated in an annular groove (3) of the first component (1) and encompasses, on the side facing the second component (2), a sealing bead (5), which revolves in the center, as well as elastic lips (8) on the opposite side, which faces towards the bottom of the annular groove (3) and which starts at a concavely curved depression (8),
**characterized in**
**that** the sealing ring (4) is supported on the groove base (3a) of the annular groove (3) so as to be rotatable in a sliding manner with lateral play and via a lubricant chamber (10), which is formed by the depression (8) and sealed by the lateral lips and filled with a lubricant, while the sealing bead (5) connects in a frictionally engaged manner with the second component (2), which can be rotated together with the sealing ring (4).

2. The ring seal device according to claim 1, **characterized in that**, on the sealing surface, the sealing ring (4) encompasses a concavely curved sealing surface depression (6), which starts on both sides of the sealing bead (5) and which has an elasticity-increasing effect, which in each case ends in a revolving edge sealing lip (7).

3. The ring seal device according to claim 2, **characterized in that** the upper flange of the edge sealing lips (7) is located below the upper flange of the sealing bead (5), wherein the edge sealing lips (7) are displaced upwardly and act as additional sealing element in response to a force, which acts on the central sealing bead (5).

4. The ring seal device according to one of claims 1 to 3, **characterized in that** the sealing bead (5), the edge sealing lips (6) and the sliding surface sealing lips (9) encompasses a rounded cross sectional shape, which bulges outwardly.

5. The ring seal device according to one of claims 1 to 4, **characterized in that** the shoulders (4a) of the sealing ring (4) are plane and run so as to be oriented diagonally inwardly.

6. The ring seal device according to one of claims 1 to 4, **characterized in that** the shoulders (4a) of the sealing ring (4) are embodied so as to be curved concavely.

7. The ring seal device according to one of claims 1 to 6, **characterized in that** the ratio of width to height of the cross sectional surface of the sealing ring (4) is approximately 2 to 2.

8. The ring seal device according to claim 1, **characterized in that** the height of the concave sliding surface depression (8) is approximately 25% to 35% of the total height of the sealing ring.

9. The ring seal device according to one of claims 1 to 8, **characterized in that** the sliding surface sealing lips (9) are narrower than the edge sealing lips (7).

## Revendications

1. Dispositif de joint annulaire pour deux éléments enfichables (1, 2), notamment pour des raccords enfichables d'appareils de protection respiratoire sur lequel une bague d'étanchéité élastique (4) est logée dans une rainure annulaire (3) du premier élément (1) et comporte sur le côté dirigé vers le deuxième élément (2) un bourrelet d'étanchéité (5) périphérique central et sur le côté opposé, dirigé vers le fond de la rainure annulaire (3) des lèvres élastiques (8) partant d'un creux concave (8), **caractérisé en ce que** la bague d'étanchéité (4) est logée de façon rotative sur le fond de rainure (3a) de la rainure annulaire (3), avec un jeu latéral (8) et de sorte à coulisser pardessus une chambre à lubrifiant (10) rendue étanche par les lèvres latérales et remplie d'un lubrifiant, alors que le bourrelet d'étanchéité (5) se raccorde en étant entraîné par friction sur le deuxième élément (2) rotatif avec la bague d'étanchéité (4).

2. Dispositif de joint annulaire selon la revendication 1, **caractérisé en ce que** la bague d'étanchéité (4) comporte sur la surface d'étanchéité un creux concave de surface d'étanchéité (6) partant des deux côtés du bourrelet d'étanchéité (5), ayant pour effet d'augmenter l'élasticité, qui se termine respectivement dans une lèvre d'étanchéité marginale (7) périphérique.

3. Dispositif de joint annulaire selon la revendication 2, **caractérisé en ce que** l'arête supérieure des lèvres d'étanchéité marginales (7) se situe en dessous de l'arête supérieure du bourrelet d'étanchéité (5) lorsqu'une force est exercée sur le bourrelet d'étanchéité central (5), les lèvres d'étanchéité marginales (7) se déplaçant vers le haut et agissant comme un élément d'étanchéité supplémentaire.

4. Dispositif de joint annulaire selon l'une quelconque des revendications 1 à 3, **caractérisé en ce que** le bourrelet d'étanchéité (5), les lèvres d'étanchéité annulaires (6) et les lèvres d'étanchéité à surfaces coulissantes (9) présentent une section transversale arrondie, bombée vers l'extérieur.

5. Dispositif de joint annulaire selon l'une quelconque des revendications 1 à 4, **caractérisé en ce que** les flancs (4a) de la bague d'étanchéité (4) sont conçus sous forme concave.

6. Dispositif de joint annulaire selon l'une quelconque des revendications 1 à 5, **caractérisé en ce que** les flancs (4a) de la bague d'étanchéité (4) sont réalisés sous forme concave.

7. Dispositif de joint annulaire selon l'une quelconque des revendications 1 à 6, **caractérisé en ce que** le rapport de la largeur à la hauteur de la surface de section transversale de la bague d'étanchéité (4) se situe à environ 2 à 1.

8. Dispositif de joint annulaire selon la revendication 1, **caractérisé en ce que** la hauteur du creux concave de la surface coulissante (8) s'élève à environ de 25 % à 35 % de la hauteur totale de la bague d'étanchéité.

9. Dispositif de joint annulaire selon l'une quelconque des revendications 1 à 8, **caractérisé en ce que** les lèvres d'étanchéité à surface coulissante (9) sont plus étroites que les lèvres d'étanchéité marginales (7).
